# FASCICULE DE BREVET EUROPEEN

(11) **EP 0 520 872 B1**
(45) Date de publication et mention de la délivrance du brevet: **27.12.1995**
(21) Numéro de dépôt: 92401742.9
(22) Date de dépôt: 22.06.1992
(51) Int. Cl.: G01M 7/06

(54) **Simulateur de vibrations de mât d'hélicoptère**
Vibrationssimulator für Luftschraubenrotor eines Hubschraubers
Vibration simulator for helicopter rotor shaft

(30) Priorité: 24.06.1991 FR 9107721
(43) Date de publication de la demande: 30.12.1992
(73) Titulaire: AEROSPATIALE Société Nationale Industrielle, 75781 Paris Cédex 16 (FR)
(72) Inventeur: Touzeau, Christophe, F-91600 Savigny Sur Orge (FR); Ladrange, Henri, F-94800 Villejuif (FR)
(74) Mandataire: Poulin, Gérard

(56) Documents cités:
- MANUFACTURING TECHNOLOGY NOTE, US ARMY MATERIEL DEVELOPMENT AND READINESS COMMAND, OFFICE OF MANUFACTURING TECHNOLOGY, Alexandria, VA, US, juin 1982, rep. no. AVRADCOM-TR-81-D-11: "Ground flying tests on a full-scale helicopter"
- IEEE INSTRUMENTATION AND MEASUREMENT TECHNOLOGY CONFERENCE, DC, Arlington, VA, US, 25-27 avril 1989, pages 383-387, IEEE, New York, US; S. GANESAN: "A microprocessor based system for vibration testing of aircraft structures"

## Description

L'invention concerne un simulateur de vibrations conçu pour effectuer, en laboratoire, le contrôle fonctionnel d'appareils tels que des viseurs conçus pour être montés en haut du mât supportant le rotor d'un hélicoptère.

Des appareils tels que des viseurs pour le tir de missiles à partir d'un hélicoptère peuvent être implantés en haut du mât supportant le rotor de l'hélicoptère.

Cependant, si ces appareils sont implantés sans avoir fait l'objet d'essais préalables en vibration, leur comportement peut s'avérer défectueux lorsqu'ils sont soumis au régime vibratoire complexe engendré par la rotation du rotor.

Malheureusement, il n'existe pas à l'heure actuelle de simulateur de vibrations permettant de simuler les vibrations complexes engendrées par le mouvement du rotor.

L'invention a précisément pour objet un simulateur de vibrations permettant de reconstituer en laboratoire le mouvement vibratoire complexe du mât supportant le rotor d'un hélicoptère, afin notamment de pouvoir réaliser le contrôle fonctionnel d'appareils tels que des viseurs destinés à être implantés en haut de ce mât.

Conformément à l'invention, un tel simulateur de vibrations comprend :
- une structure de référence fixe ;
- une structure mobile porte mât montée sur la structure de référence fixe de façon à disposer d'un degré de liberté de translation selon une direction verticale et de deux degrés de liberté de rotation autour de deux axes horizontaux, respectivement de roulis et de tangage, perpendiculaires entre eux ;
- trois excitateurs linéaires solidaires de la structure de référence fixe, ayant des axes verticaux parallèles et agissant sur la structure mobile porte mât en trois points formant un triangle équilatéral dont le centre est situé sur l'axe du mât ;
- des moyens de pilotage, sensibles à des signaux délivrés par des accéléromètres montés sur des parties mobiles des excitateurs, pour délivrer des signaux de pilotage de ces excitateurs, déphasés de 120° les uns par rapport aux autres.

Avantageusement, des moyens de délestage tels que des coussins pneumatiques horizontaux sont prévus entre la structure mobile porte mât et la structure de référence fixe, afin que les vibrations de la structure mobile produites par les excitateurs linéaires ne soient pas perturbées par la masse de cette structure mobile.

Par ailleurs, chaque excitateur linéaire agit avantageusement sur la structure mobile porte mât par l'intermédiaire d'un mécanisme de liaison tel qu'une rotule hydrostatique double pivot autorisant un désalignement angulaire et latéral lors de l'entrée en vibration de la structure mobile.

Selon un mode de réalisation préféré de l'invention, la structure mobile porte mât comporte un plateau d'interface articulé par une rotule sur une colonne de guidage ayant un axe vertical confondu avec l'axe du mât lorsque les excitateurs sont au repos, la colonne de guidage coopérant avec des moyens de guidage montés sur la structure de référence fixe et autorisant un déplacement de ladite colonne selon son axe, le plateau d'interface coopérant en outre avec la structure de référence fixe par des moyens de limitation de mouvement interdisant toute rotation de la plaque d'interface autour de l'axe vertical de la colonne de guidage.

Afin que les vibrations simulées dans le mât correspondent aux vibrations du mât supportant le rotor d'un hélicoptère, on a déterminé que les signaux de pilotage délivrés par les moyens de pilotage doivent être calculés afin de soumettre la structure mobile simultanément à :
- une vibration horizontale circulaire, à une fréquence Ω de rotation simulée d'un rotor d'hélicoptère ;
- des vibrations horizontales circulaires, à des fréquences harmoniques k n Ω , où k représente un entier positif et n le nombre de pales du rotor ;
- une vibration linéaire verticale à la fréquence n Ω; et
- une vibration aléatoire large bande.

On décrira maintenant, à titre d'exemple non limitatif, un mode de réalisation préféré de l'invention, en se référant aux dessins annexés, dans lesquels :
- la figure 1 est une vue en perspective, avec arrachement partiel, illustrant un simulateur de vibrations de mât d'hélicoptère réalisé conformément à l'invention ;
- la figure 2 est une vue en coupe du simulateur de la figure 1 selon un plan vertical ; et
- la figure 3 est une vue de dessus, en coupe partielle, du simlateur des figures 1 et 2 représentant également de façon schématique le circuit de commande des accéléromètres.

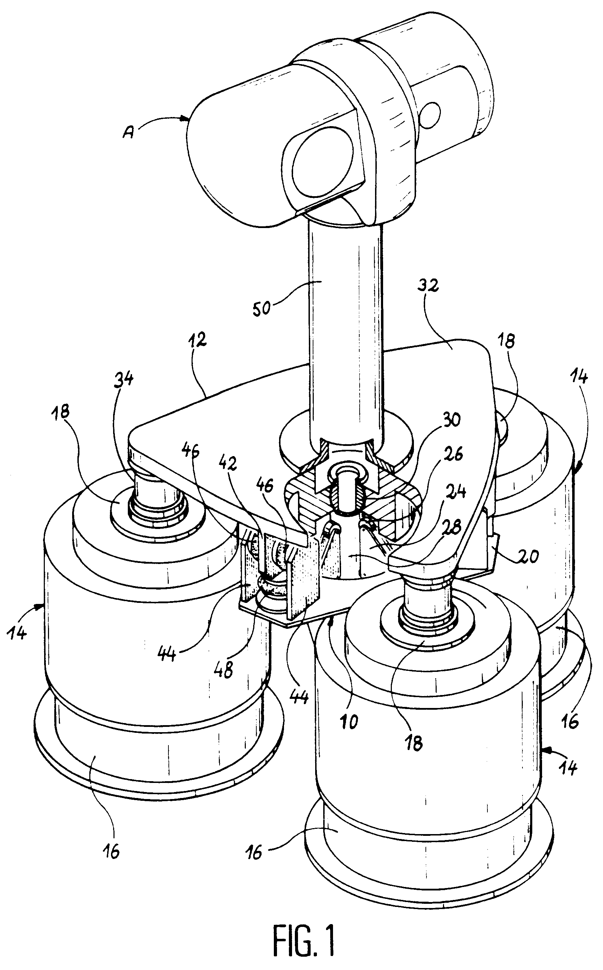

Comme l'illustrent les figures 1 à 3, le simulateur de vibrations selon l'invention comprend une structure de référence fixe, désignée de façon générale par la référence 10, une structure mobile porte mât, désignée de façon générale par la référence 12, et trois excitateurs linéaires 14.

Les trois excitateurs linéaires 14 sont identiques et constitués par exemple par des excitateurs électrodynamiques de type connu. Chacun d'entre eux repose sur un corps cylindrique fixe 16, assujetti à un bâti de supportage commun (non représenté), de telle sorte que les axes des excitateurs soient orientés verticalement et forment un triangle équilatéral dans un plan horizontal.

Chacun des excitateurs 14 comporte également un organe de sortie, constitué par une table horizontale mobile 18 apte à se déplacer selon l'axe de l'excitateur correspondant en fonction des signaux électriques appliqués à ce dernier. Les tables mobiles 18 sont placées à l'extrémité supérieure de chacun des excitateur 14.

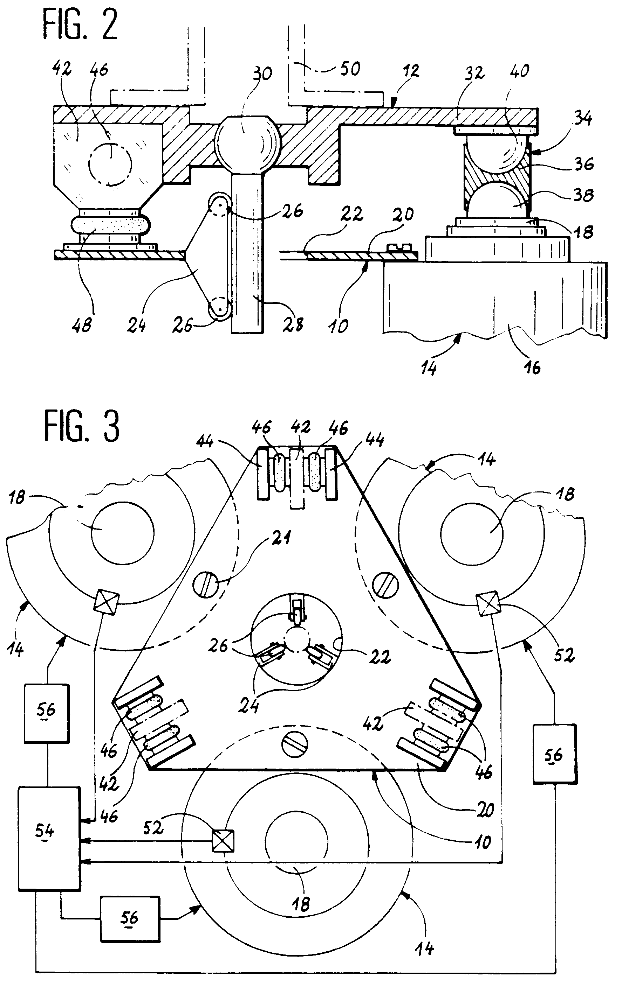

La structure de référence fixe 10 du simulateur comprend principalement une plaque horizontale 20, de forme généralement triangulaire, qui est assujettie à la face supérieure du corps 16 de chacun des excitateurs 14 par un moyen de fixation quelconque, tel que des vis 21 (figure 3).

Dans sa partie centrale, la plaque horizontale 20 comporte une fenêtre circulaire 22 dont l'axe est situé à égale distance des axes verticaux de chacun des excitateurs 14. Des organes de guidage 24, par exemple au nombre de trois répartis à 120° les uns des autres autour de l'axe de la fenêtre circulaire 22, sont fixés à la plaque horizontale 20, de façon à faire saillie radialement vers l'intérieur dans la fenêtre circulaire 22. Chacun de ces organes de guidage 24 porte par exemple deux galets 26 (figure 2) qui sont en contact de roulement avec la surface extérieure d'une colonne de guidage ou fourreau tubulaire 28, de telle sorte que cette colonne peut se déplacer selon un axe vertical situé à égale distance de chacun des axes des excitateurs 14.

A son extrémité supérieure, la colonne de guidage 28 porte une rotule 30 sur laquelle est articulé un plateau d'interface 32 qui constitue l'élément principal de la structure mobile porte mât 12. Ce plateau d'interface 32, qui occupe une position sensiblement horizontale, aux vibrations engendrées par les excitateurs 14 près, présente généralement la forme d'un triangle équilatéral dont les sommets sont situés en face des tables mobiles 18 de chacun des excitateurs 14.

Le mouvement de la table mobile 18 de chacun des excitateurs 14 est transmis au plateau d'interface 32 par un mécanisme de liaison 34 autorisant un léger désalignement angulaire et latéral entre les points de fixation de ce mécanisme respectivement sur la table mobile et sur le plateau d'interface, tout en assurant la transmission intégrale des mouvements entre ces deux pièces.

Dans le mode de réalisation représenté et comme l'illustre notamment la figure 2, ces mécanismes de liaison 34 sont constitués par des rotules hydrostatiques double pivot qui comprennent chacune un élément central 36 dont les extrémités sont articulées respectivement sur une demi-rotule inférieure 38 solidaire de la table mobile 18 de l'excitateur 14 correspondant et sur une demi-rotule supérieure 40 solidaire de la face inférieure du plateau d'interface 32. Il est à noter que lorsque le plateau d'interface 32 est horizontal, les centres des demi-rotules 38 et 40 de chacune des rotules hydrostatiques double pivot 34 sont disposés selon l'axe vertical de l'excitateur 14 correspondant.

Le montage précédemment décrit de la structure mobile porte mât 12 sur la structure de référence fixe 10 par l'intermédiaire de la rotule 30 et de la colonne de guidage 28 coopérant avec les galets 26 donne à la structure mobile porte mât un degré de liberté de translation selon l'axe vertical de la colonne 28 et trois degrés de liberté de rotation respectivement autour de cet axe vertical et autour de deux axes horizontaux orthogonaux, respectivement de roulis et de tangage, passant par le centre de la rotule 30.

Afin d'obtenir la simulation désirée, la structure mobile porte mât 12 doit être bloquée en rotation de lacet autour de l'axe vertical de la colonne de guidage 28. Pour cela, le plateau d'interface 32 porte sur sa face inférieure, entre chaque paire d'excitateurs 14, une nervure 42 orientée radialement par rapport à un axe perpendiculaire à la face supérieure plane du plateau d'interface 32 et passant par le centre du triangle équilatéral formé par ce plateau. Chacune de ces nervures 42 se trouve placée entre deux nervures parallèles 44 qui font saillie sur la face supérieure de la plaque horizontale 20. Deux coussins pneumatiques verticaux 46 sont disposés coaxialement, selon un même axe horizontal orthogonal à l'axe de la colonne de guidage 28, entre chacune des nervures 42 et les nervures 44 adjacentes, de façon à empêcher toute rotation de lacet de la structure mobile 12, tout en n'entravant pas les autres mouvements de cette structure.

Le simulateur selon l'invention comprend en outre des moyens de délestage, grâce auxquels la masse de la structure mobile porte mât 12 n'est pas transmise directement à la structure de référence fixe 10.

Dans le mode de réalisation représenté et comme l'illustrent plus précisément les figures 1 et 2, ces moyens de délestage comprennent un coussin pneumatique horizontal 48, d'axe vertical, interposé entre le bord inférieur de chacune des nervures 42 et la face supérieure de la plaque horizontale 20, entre les deux nervures 44 correspondantes.

Comme l'illustre plus précisément la figure 1, l'appareil A à tester, tel qu'un viseur pour tir de missiles, est placé à l'extrémité supérieure d'un mât 50 dont l'extrémité inférieure est assujettie à la face supérieure du plateau d'interface 32, de telle sorte que l'axe du mât 50 soit perpendiculaire au plan formé par cette face et passe par le centre de la rotule 30, quelle que soit la position instantanée occupée par la structure mobile porte mât 12. Par conséquent, lorsque la face supérieure du plateau d'interface 32 est horizontale, l'axe du mât 50 est vertical et confondu avec l'axe de la colonne de guidage 28. L'axe du mât se trouve alors à égale distance des axes de chacun des excitateurs 14.

En se référant plus précisément à la figure 3, on voit qu'un accéléromètre 52 est monté sur la table mobile 18 de chacun des excitateurs 14. Les accéléromètres 52 délivrent des signaux qui sont transmis à des moyens de pilotage 54 constitués par exemple par un calculateur numérique, programmé de façon à commander chacun des excitateurs 14, au travers d'un amplificateur 56, en fonction des signaux délivrés par les accéléromètres 52.

De façon plus précise, les moyens de pilotage 54 délivrent des signaux de pilotage des excitateurs 14, qui sont déphasés de 120° les uns par rapport aux autres, de façon à simuler les vibrations engendrées par le mouvement alterné des pales d'un rotor d'hélicoptère qui serait monté sur le mât 50.

La programmation du calculateur numérique constituant les moyens de pilotage 54 permet en outre de simuler les différents mouvements élémentaires constituant le mouvement complexe auquel est soumis le mât supportant le rotor d'un hélicoptère. Des essais ont montré que ce mouvement complexe peut se décomposer en plusieurs mouvements élémentaires qui sont simulés dans l'appareil selon l'invention, de telle sorte que la structure mobile porte mât 12 soit soumise simultanément à :
- une vibration horizontale circulaire, à une fréquence Ω de rotation simulé d'un rotor d'hélicoptère ;
- des vibrations horizontales circulaires, à des fréquences harmoniques k n Ω , où k représente un entier positif et n le nombre de pales du rotor ;
- une vibration linéaire verticale à la fréquence n Ω; et
- une vibration aléatoire large bande.

Afin d'assurer le traitement désiré, des moyens d'affichage peuvent également être prévus pour obtenir les courbes de Lissajous représentatives des vibrations auxquelles est soumis l'appareil A, dans un plan horizontal et dans un plan vertical.

Bien entendu, l'invention n'est pas limitée au mode de réalisation qui vient d'être décrit à titre d'exemple, mais en couvre toutes les variantes. Ainsi, on comprendra notamment que les différents mécanismes décrits, permettant d'obtenir le degré de liberté de translation et les deux degrés de liberté de rotation souhaités de la structure mobile porte mât, peuvent être remplacés par tout mécanisme équivalent sans sortir du cadre de l'invention. De même, les formes données à la structure de référence fixe ainsi qu'à la structure mobile porte mât n'ont qu'une fonction d'illustration et ne doivent donc pas être considérées comme limitant la portée de l'invention.

## Revendications

1. Simulateur de vibrations du mât supportant le rotor d'un hélicoptère, comprenant :
- une structure de référence fixe (10) ;
- une structure mobile porte mât (12) montée sur la structure de référence fixe de façon à disposer d'un degré de liberté de translat on selon une direction verticale et de deux degrés de liberté de rotation autour de deux axes horizontaux, respectivement de roulis et de tangage, perpendiculaires entre eux ;
- trois excitateurs linéaires (14) solidaires de la structure de référence fixe, ayant des axes verticaux parallèles et agissant sur la structure mobile porte mât en trois points formant un triangle équilatéral dont le centre est situé sur l'axe du mât ;
- des moyens de pilotage (54), sensibles à des signaux délivrés par des accéléromètres (52) montés sur des parties mobiles des excitateurs, pour délivrer des signaux de pilotage de ces excitateurs, déphasés de 120° les uns par rapport aux autres.

2. Simulateur selon la revendication 1, caractérisé par le fait que des moyens de délestage (48) sont prévus entre la structure mobile porte mât et la structure de référence fixe.

3. Simulateur selon la revendication 2, caractérisé par le fait que les moyens de délestage comprennent trois coussins pneumatiques horizontaux (48).

4. Simulateur selon l'une quelconque des revendications précédentes, caractérisé par le fait que chaque excitateur linéaire (14) agit sur la structure mobile porte mât par l'intermédiaire d'un mécanisme de liaison (34) autorisant un désalignement angulaire et latéral.

5. Simulateur selon la revendication 4, caractérisé par le fait que le mécanisme de liaison est une rotule hydrostatique double pivot (34).

6. Simulateur selon l'une quelconque des revendications précédentes, caractérisé par le fait que la structure mobile porte mât comporte un plateau d'interface (32) articulé par une rotule (30) sur une colonne de guidage (28) ayant un axe vertical confondu avec l'axe du mât lorsque les excitateurs sont au repos, la colonne de guidage coopérant avec des moyens de guidage (26) montés sur la structure de référence fixe et autorisant un déplacement de ladite colonne selon son axe, le plateau d'interface (32) coopérant en outre avec la structure de référence fixe (10) par des moyens de limitation de mouvement (42,44,46) interdisant toute rotation de la plaque d'interface autour de l'axe vertical de la colonne de guidage (28).

7. Simulateur selon l'une quelconque des revendications précédentes, caractérisé par le fait que lesdits signaux de pilotage délivrés par les moyens de pilotage (54) sont déterminés afin de soumettre la structure mobile simultanément à :
- une vibration horizontale circulaire, à une fréquence Ω de rotation simulée d'un rotor d'hélicoptère ;
- des vibrations horizontales circulaires, à des fréquences harmoniques k n Ω, où k représente un entier positif et n le nombre de pales du rotor ;
- une vibration linéaire verticale à la fréquence nΩ; et
- une vibration aléatoire large bande.

## Claims

1. Simulator of the vibrations of the shaft supporting the rotor of a helicopter comprising:
- a fixed reference structure (10);
- a shaft-carrying mobile structure (12) fitted on the fixed reference structure so as to have one degree of translational freedom in a vertical direction and two degrees of rotational freedom about two horizontal axes, namely the roll and pitch axes, which are perpendicular to one another;
- three linear exciters (14) integral with the fixed reference structure and having parallel vertical axes and acting on the shaft-carrying mobile structure at three points forming an equilateral triangle, whose centre is located on the axis of the shaft;
- control means (54) sensitive to signals supplied by accelerometers (52) mounted on mobile parts of the exciters in order to supply control signals for said exciters, which are mutually phase shifted by 120°.

2. Simulator according to claim 1, characterized in that load relief means (48) are provided between the mobile shaft-carrying structure and the fixed reference structure.

3. Simulator according to claim 2, characterized in that the load relief means comprise three horizontal, pneumatic cushions (48).

4. Simulator according to any one of the preceding claims, characterized in that each linear exciter (14) acts on the mobile shaft-carrying structure via a connecting mechanism (34) allowing an angular, lateral misalignment.

5. Simulator according to claim 4, characterized in that the connecting mechanism is a double pivot hydrostatic ball joint (34).

6. Simulator according to any one of the preceding claims, characterized in that the shaft-carrying mobile structure has an interface plate (32) articulated by a ball joint (30) on a guide column (28) having a vertical axis coinciding with the axis of the shaft when the exciters are inoperative, the guide column cooperating with guidance means (26) mounted on the fixed reference structure and allowing a displacement of said column along its axis, the interface plate (32) also cooperating with the fixed reference structure (10) by movement limiting means (42, 44, 46) preventing any rotation of the interface plate around the vertical axis of the guide column (28).

7. Simulator according to any one of the preceding claims, characterized in that the control signals supplied by the control means (54) are determined so as to subject the mobile structure simultaneously to:
- a circular horizontal vibration at a simulated rotation frequency of a helicopter rotor;
- circular horizontal vibrations at harmonic frequencies k n Ω, in which k represents a positive integer and n the number of rotor blades;
- a vertical linear vibration at the frequency nΩ; and
- a broad band, random vibration.

## Patentansprüche

1. Vibrationssimulator für den Luftschrauberrotor eines Hubschraubers, besteht aus:
- einer fest eingebauten Vorrichtung (10);
- einer beweglichen Tragkonstruktion, die senkrecht auf die fest eingebaute Vorrichtung montiert ist, so daß ein Spiel von einem Grad im vertikaler Richtung und zwei Grad in Rotationsrichtung um zwei horizontale Achsen bzw. einer Drehbewegung um die Längsachse und einer Nickschwingung besteht;
- drei linearen Erregern (14) mit parallelen vertikalen Achsen, die drehfest mit der fest eingebauten Vorrichtung verbunden sind und an drei Stellen auf die bewegliche Tragkonstruktion wirken, wobei sie ein gleichschenkliges Dreieck bilden, dessen Mitte sich über der Rotorachse befindet;
- Steuervorrichtungen (54), die auf übertragene Signale der auf die beweglichen Teile der Erreger montierten Beschleunigungsmesser (52) reagieren und zum Übertragen der Steuersignale dieser Erreger dienen, die um 120° phasenverschoben zueinander sind.

2. Ein Simulator nach Anspruch 1, dadurch gekennzeichnet, daß Entlastungsvorrichtungen (48) zwischen der mobilen Tragkonstruktion und der befestigten Vorrichtung vorgesehen sind.

3. Ein Simulator nach Anspruch 2, dadurch gekennzeichnet, daß die Entlastungsvorrichtungen drei horizontale Luftkissen (48) umfassen.

4. Ein Simulator nach einem der zuvor genannten Ansprüche, dadurch gekennzeichnet, daß jeder der linearen Erreger (14) durch einen Verbindungsmechanismus (34), der eine winklige und seitliche Abweichung ermöglicht, auf die bewegliche Tragkonstruktion wirkt.

5. Ein Simulator nach Anspruch 4, dadurch gekennzeichnet, daß der Verbindungsmechanismus aus einem hydrostatischen Doppelkugelgelenk mit Zapfen besteht.

6. Ein Simulator nach einem der zuvor genannten Ansprüche, dadurch gekennzeichnet, daß die bewegliche Tragkonstruktion eine Zwischenplatte (32) umfaßt, die durch ein Kugelgelenk (30) freibeweglich auf einer Führungssäule (28) sitzt, deren vertikale Achse mit der Rotorwelle verschmolzen ist, wobei die Führungssäule bei Erregern in Ruhe zusammen mit den auf der fest eingebauten Vorrichtung angebrachten Führungsvorrichtungen (26) das Verschieben dieser Säule um ihre Achse bewirkt und gleichzeitig die Zwischenplatte (32) über Vorrichtungen zur Bewegungsbegrenzung (42, 44, 46) zusammen mit der fest eingebauten Vorrichtung eine Rotation der Zwischenplatte um die Längsachse der Säule (28) verhindert.

7. Ein Simulator nach einem der zuvor genannten Ansprüche, dadurch gekennzeichnet, daß die von den Steuervorrichtungen (54) übertragenen Steuersignale dazu bestimmt sind, die mobile Tragkonstruktion gleichzeitig folgenden Einflüssen auszusetzen:
- einer horizontalen Kreisvibration bei einer simulierten Rotationsfrequenz Ω eines Luftschraubenrotors;
- horizontalen Kreisvibrationen bei Oberschwingungsfrequenzen k n Ω, wobei k eine ganze positive Zahl und n die Anzahl der Blätter der Luftschraube darstellt;
- einer vertikalen Linearvibration bei der Frequenz nΩ, und
- einer Zufallsvibration mit großem Frequenzband.
